# EUROPEAN PATENT SPECIFICATION

(11) **EP 0 602 998 B1**
(45) Date of publication and mention of the grant of the patent: **24.02.1999**
(21) Application number: 93310232.9
(22) Date of filing: 17.12.1993
(51) Int. Cl.: G11B 15/675

(54) **Tape recorder cassette loading**
Kassettenladevorrichtung für Bandrekorder
Dispositif de chargement de cassette pour appareil d'enregistrement de bande

(30) Priority: 17.12.1992 KR 9224590; 17.12.1992 KR 9224591
(43) Date of publication of application: 22.06.1994
(73) Proprietor: SAMSUNG ELECTRONICS CO., LTD., Suwon-city, Kyungki-do 441-373 (KR)
(72) Inventor: Choi, Do Young, Suwon-city, Kyungki-do (KR); Seo, Jae Kab, Suwon-city, Kyungki-do (KR)
(74) Representative: Stanley, David William

(56) References cited:
- EP-A- 0 260 437
- EP-A- 0 384 664
- DE-A- 3 641 618
- US-A- 4 757 400

## Description

The present invention relates to tape recorders, and more particularly to loading and ejecting cassettes therefrom.

In the context of this specification, the term "tape recorder" is used in its popular sense of including devices for recording onto and/or replaying from magnetic tapes.

Generally, various components of tape recorders required for recording signals on a tape or reproducing the recorded signals therefrom are positioned on either one deck, or a sub-deck and a main deck. However, installation on one deck has a problem in that it is impossible to make a product small since all of the components should be positioned on one deck and, therefore, the deck size itself tends to be increased. A recent tape recorder has components that are more dispersed by using, instead of a single deck, a sub-deck and a main deck, in order to minimize product size. However, this kind of tape recorder has a limitation in minimizing the size of the product itself, since the sub-deck moves on the main deck by a predetermined distance during operation. Moreover, such a tape recorder must use a separate driving motor when loading and ejecting the cassette tape.

On the other hand, as disclosed in Korean Patent Application No. 92-13757, the present applicant has proposed a tape recorder which can be simplified with respect to its structure and minimized to be of pocket size, by loading and ejecting a tape on a drum positioned within a housing according to closing and opening a lever housing after a cassette tape is placed in the housing and the lever housing operated as a hinge on a main deck. However, the tape recorder as mentioned above may have problems in that a cassette tape can be safely mounted on the main deck only by pressing and closing the lever housing after primarily loading the cassette tape in the housing, and the tape should be completely loaded on the drum since the loading apparatus can be operated by a separate driving motor. That is, this tape recorder has drawbacks that its construction can be complicated and its structural operation may not be easy.

The present invention aim to provide a cassette loading mechanism of a tape recorder in which a cassette tape is successively loaded and ejected during operating a lever member in an up and down movement, thereby easily and smoothly operating the cassette loading mechanism using a simple construction.

According to one aspect of the present invention, there is provided a cassette loading mechanism of a tape recorder for recording and/or reproducing signals on a tape transported along a predetermined path, the mechanism comprising:
a main deck having a tape transport system;
a lever member hingedly mounted on said main deck;
a support arranged to be moved up and down on said main deck by means of said lever member; and
a cassette holder arranged to move from side to side on said support:
whereby, when said lever member is rotated up and down, a side gear mounted on said support is brought into meshing engagement with a rack gear positioned on said lever member, and said cassette holder positioned on said support is slidably moved by clutching means connected to said gear, thereby to allow loading and ejecting of a cassette tape.

Preferably, in use, loading and ejecting operations and up and down operations of a cassette tape are sequentially performed on said support by operating said lever member so as to rotate up and down.

Preferably, slots are formed in one end of said main deck and said support, respectively, and receive first and second pins formed on said lever member.

Preferably, said clutching means comprises a sector gear installed on said support to pivot by means of a bevel gear coaxially formed with said side gear; and a slide lever which rotates in meshing engagement with said sector gear, one end of which has a slot which receives a pin positioned on said cassette holder.

Preferably, the directions of said slots formed in said main deck and said support are substantially at right angles to each other.

Preferably, a resilient force is applied to said sector gear by a torsion spring of which one end is secured to said support.

The invention extends to a tape recorder and/or player provided with a mechanism according to any of the preceding aspects of the invention.

For a better understanding of the invention, and to show how embodiments of the same may be carried into effect, reference will now be made, by way of example, to the accompanying diagrammatic drawings, in which:
Figure 1 is a schematic side view illustrating one example of a cassette loading mechanism of a tape recorder according to the present invention;
Figure 2 is a schematic side view illustrating a condition in which the apparatus shown in Figure 1 is safely mounted on a deck;
Figures 3A to 3C are segmentary views of principal portions for illustrating operational states of a lever member of the apparatus shown in Figure 1;
Figures 4A and 4B are plan views illustrating operational states of the apparatus of Figure 1; and
Figure 5 is a segmentary side view illustrating principal portions of Figure 4.

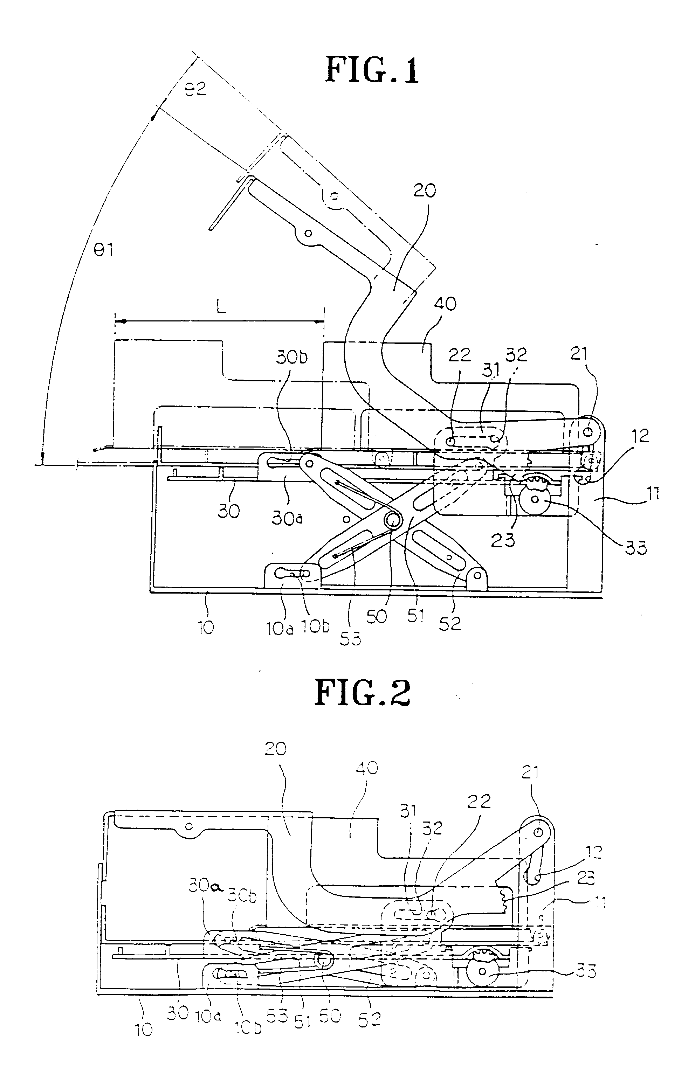

The cassette loading mechanism shown schematically in Figures 1 to 4 includes a main deck 10 having various components such as a reel (not shown) required for tape transport, a lever member (or lever*housing) 20 which is hinge-coupled to one side of the main deck 10 and pivots up and down, a housing 30 positioned between the main deck 10, the lever member 20 which pivots up and down, and a cassette holder 40 which moves horizontally (as seen in Figure 1) along the housing 30.

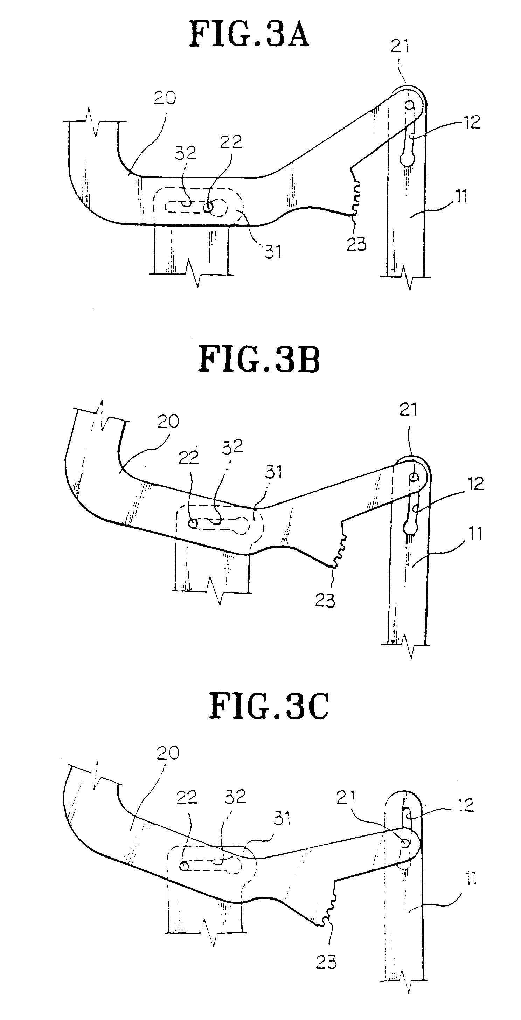

Further, an upwardly projecting bracket 11 is positioned on one side of the main deck 10. A slot 12 of a small circular arc is formed in a vertical direction in the middle end of the bracket 11, and another slot 32 is formed in a horizontal direction in a bracket 31 formed on one side of the housing 30, so that first and second pins 21 and 22 respectively projecting on one side of the lever member 20 are inserted to be coupled with them, as shown in Figures 3A to 3C.

A rack gear 23 is positioned on the end of the lever member 20 to be brought into meshing engagement with a side gear 33 mounted on the side of the housing 30. When the side gear 33 is rotated, the cassette holder 40 positioned on the upper portion of the housing 30 is inwardly loaded or ejected by a clutch and interlocking device.

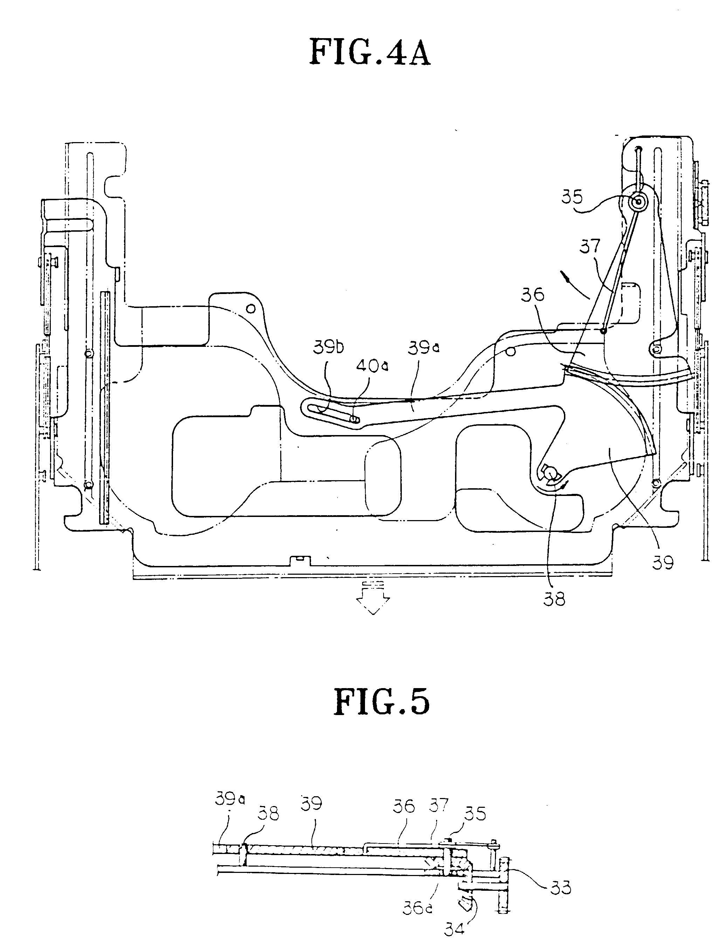

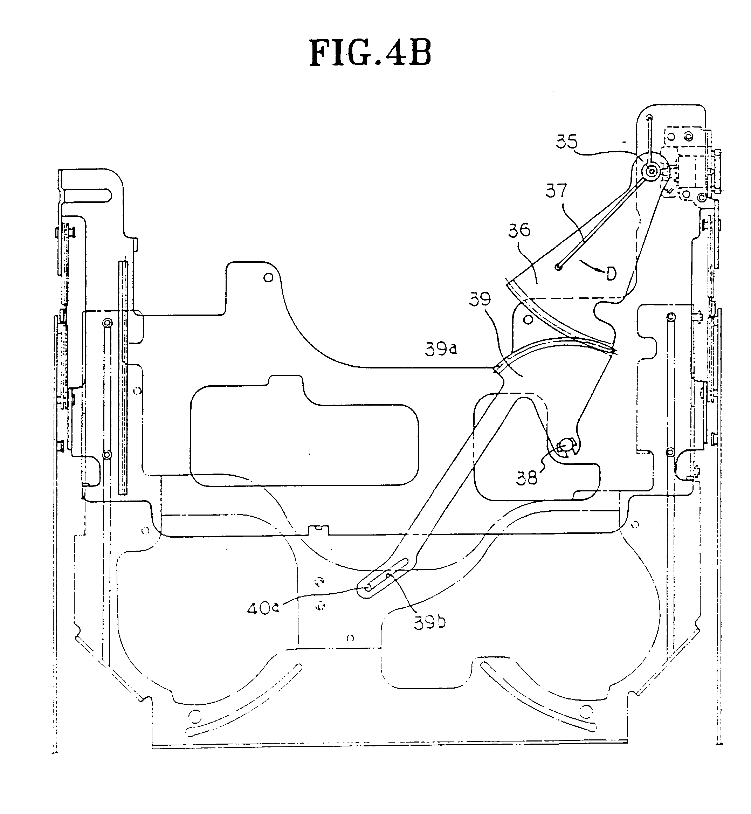

As shown in Figures 4A, and 4B and 5, the clutch operated by the side gear 33 mounted on the side of the housing 30 is brought into meshing engagement with a bevel gear 36a which is provided on a lower portion of a sector gear 36, meshes with a bevel gear 34 coaxially formed with the side gear 33, and rotates around the centre of a pin 35 on the housing 30. Also, a torsion spring 37 cooperating with both the sector gear 36 and the housing 30 is mounted on the pin 35.

A slide lever 39 which swings around a pin 38 on the housing 30 is brought into meshing engagement with the sector gear 36. A slot 39b is formed at the end of an arm 39a formed on one side of the slide lever 39 facing an approximate centre of the cassette loading mechanism, and a pin 40a projecting from the cassette holder 40 is inserted and fitted to the arm 39a.

Slots 10b and 30b are formed in angle pieces 10a and 30a formed on the sides of the main deck 10 and the housing 30, respectively, so that first sides of respective first and second links 51 and 52 provided as an X-shape around an axis 50 are connected to respective angle pieces 10a and 30a. Other sides of the respective first and second links 51 and 52 are connected with the housing 30 and the main deck 10 so as to pivot, so that a predetermined elasticity is applied by means of the torsion spring 53.

According to this embodiment of the invention with the components as specified above, the housing 30 is elevated by resilience of the torsion spring 53 positioned at the first and second links 51 and 52 as a locking device (not shown) is released when the housing 30 is safely mounted to the main deck 10 as shown in Figure 2. At this time, as shown in Figure 1, the lever member 20 is raised by the angular amount θ1 due to the force exerted thereon, and would be raised further; but it cannot raise any more since the first pin 21 of the lever member 20 engages the end of the slot 12 of the main deck 10, and the second pin 22 of the lever member 20 is interlocked with the housing 30 to be continuously raised.

That is, while the housing 30 is moved up by the first and second links 51 and 52, the lever member 20 is rotated through the angle θ1. using the first pin 21 as a hinge point. In this state, the lever member 20 is moved up by as much as θ2 as indicated by a broken line in Figure 1, in which the rack gear 23 positioned on one end of the lever member 20 rotates the side gear 33 mounted on the housing 30, and therefore, the rotation force of the side gear 33 is transferred to the sector gear 36 through the bevel gears 34 and 36a.

Accordingly, in the state that the cassette holder 40 is placed on the housing 30, as shown in Figure 4A, if the sector gear 36 rotates resiliently clockwise around the pin 35 under the influence of the torsion spring 37, the slide lever 39 rotates counter-clockwise around the pin 38, so that the arm 39a formed on the slide lever 39 moves as shown in Figure 4B, thereby to eject the cassette holder 40 outside of the housing 30.

Thus, the cassette holder 40 for housing the cassette tape is moved by a predetermined distance L as shown in broken line and, simultaneously, the cassette tape is easily ejected.

Herein, although a one-side force and a moment force occur in the lever member 20 which is in meshing engagement with the side gear 33 via the rack gear 23, as the second pin 22 of the lever member 20 is guided at the side of the slot 32 of the housing 30, the one-side force acts parallel with a reacting force and then lapses. Therefore, since the lever member 20 rotates the first pin 21 of the lever member 20 connected with the slot 12 of the main deck 10 by using the second pin 22 as a hinge point, the lever member 20 rotates further by as much as θ2, thereby ejecting the cassette holder 40.

However, when the cassette tape is to be safely mounted, the cassette tape is inserted into the cassette holder 40 and the lever member 20 is operated to move through θ2. By this operation, contrary to the process for ejecting, the cassette holder 40 is moved inwardly on the housing 30, thereby completing the loading. By descending further through θ2, the cassette tape can be safely mounted on the main deck 10.

As seen from the above, the illustrated cassette loading mechanism can be more smoothly and harmoniously operated without using a separate motor, by sequentially loading and ejecting the cassette tape while using the lever member which is opened and closed in a hinge manner.

In this specification, terms of absolute orientation are used conveniently to denote the usual orientation of items in normal use, and/or as shown in the accompanying drawings. However, such items could be disposed in other orientations, and in the context of this specification, terms of absolute orientation, such as "top", "bottom" , "vertical" , "horizontal" , "left" or "right", etc. are to be construed accordingly, to include such alternative orientations.

## Claims

1. A cassette loading mechanism of a tape recorder for recording and/or reproducing signals on a tape transported along a predetermined path, the mechanism comprising:
a main deck (10) having a tape transport system;
a lever member (20) hingedly mounted on said main deck (10);
a support (30) arranged to be moved up and down on said main deck (10) by means of said lever member (20); and
a cassette holder (40) arranged to move from side to side on said support (30):
whereby, when said lever member (20) is rotated up and down, a side gear (33) mounted on said support (30) is brought into meshing engagement with a rack gear (23) positioned on said lever member (20), and said cassette holder (40) positioned on said support (30) is slidably moved by clutching means connected to said gear, thereby to allow loading and ejecting of a cassette tape.

2. A mechanism according to claim 1, wherein, in use, loading and ejecting operations and up and down operations of a cassette tape are sequentially performed on said support (30) by operating said lever member (20) so as to rotate up and down.

3. A mechanism according to claim 1 or 2, wherein slots (12,32) are formed in one end of said main deck (10) and said support (30), respectively, and receive first and second pins (21,22) formed on said lever member (20).

4. A mechanism according to claim 1, 2 or 3, wherein said clutching means comprises a sector gear (36) installed on said support (30) to pivot by means of a bevel gear (34) coaxially formed with said side gear (33); and a slide lever (39) which rotates in meshing engagement with said sector gear (36), one end of which has a slot (39b) which receives a pin (40a) positioned on said cassette holder (40).

5. A mechanism according to claim 3, or to claim 4 or 5 as appendant thereto, wherein the directions of said slots (12,32) formed in said main deck (10) and said support (30) are substantially at right angles to each other.

6. A mechanism according to claim 4 or to claims 4 and 5, wherein a resilient force is applied to said sector gear (36) by a torsion spring (37) of which one end is secured to said support (30).

7. A tape recorder and/or player provided with a mechanism according to any of the preceding claims.

## Patentansprüche

1. Kassetteneinlegemechanismus eines Bandaufzeichnungsgerätes zum Aufzeichnen und/oder Wiedergeben von Signalen auf einem Band, das auf einem vorgegebenen Weg transportiert wird, wobei der Mechanismus umfaßt:
ein Hauptlaufwerk (10) mit einem Bandtransportsystem;
ein Hebelelement (20), das gelenkig an dem Hauptlaufwerk (10) angebracht ist;
eine Auflage (30), die mit dem Hebelelement (20) an dem Hauptlaufwerk (10) nach oben und nach unten bewegt wird; und
eine Kassettenaufnahme (40), die sich auf der Auflage (30) von einer Seite zur anderen bewegt;
wobei, wenn das Hebelelement (20) nach oben und nach unten gedreht wird, ein Stirnzahnrad (33), das an der Auflage (30) angebracht ist, in kämmenden Eingriff mit einer Zahnstange (23) gebracht wird, die an dem Hebelelement (20) angeordnet ist, und die an der Auflage (30) angeordnete Kassettenaufnahme (40) durch eine Kupplungseinrichtung, die mit dem Zahnrad verbunden ist, gleitend bewegt wird, so daß ein Kassetten band eingelegt und ausgeworfen werden kann.

2. Mechanismus nach Anspruch 1, wobei in Funktion Einlege- und Auswerfvorgänge sowie Aufwärts- und Abwärtsbewegungs-Vorgänge eines Kassettenbandes nacheinander auf der Auflage (30) ausgeführt werden, indem das Hebelelement (20) so betätigt wird, daß es sich nach oben und nach unten dreht.

3. Mechanismus nach Anspruch 1 oder 2, wobei Schlitze (12, 32) jeweils in einem Ende des Hauptlaufwerkes (10) und der Auflage (30) ausgebildet sind und einen ersten und einen zweiten Zapfen (21, 22) aufnehmen, die an dem Hebelelement (20) ausgebildet sind.

4. Mechanismus nach Anspruch 1, 2 oder 3, wobei die Kupplungseinrichtung einen Zahnbogen (36) umfaßt, der an der Auflage (30) angebracht ist und mittels eines Kegelzahnrades (34) geschwenkt wird, das koaxial zu dem Stirnzahnrad (33) ausgebildet ist; sowie einen Gleithebel (39), der sich in kämmendem Eingriff mit dem Zahnbogen (36) dreht, wobei ein Ende desselben einen Schlitz (39b) aufweist, der einen Zapfen (40a) aufnimmt, der an der Kassettenaufnahme (40) angeordnet ist.

5. Mechanismus nach Anspruch 3 oder Anspruch 4 oder 5 im Zusammenhang damit, wobei die Richtungen der Schlitze (12, 32), die in dem Hauptlaufwerk (10) und der Auflage (30) ausgebildet sind, im wesentlichen rechtwinklig zueinander sind.

6. Mechanismus nach Anspruch 4 oder nach Anspruch 4 und 5, wobei durch eine Drehfeder (37), deren eines Ende an der Auflage (30) befestigt ist, eine Federkraft auf den Zahnbogen (36) ausgeübt wird.

7. Bandaufzeichnungs- und/oder -Abspielgerät, das mit einem Mechanismus nach einem der vorangehenden Ansprüche versehen ist.

## Revendications

1. Mécanisme de chargement de cassette de magnétophone destiné à enregistrer et/ou reproduire des signaux sur une bande transportée le long d'un trajet prédéterminé, le mécanisme comprenant :
une platine principale (10) ayant un système de transport de bande ;
un élément de levier (20) monté en étant articulé sur ladite platine principale (10) ;
un support (30) disposé de manière à monter et descendre sur ladite platine principale (10) au moyen dudit élément de levier (20) ; et
un support de cassette (40) disposé de manière à se déplacer latéralement sur ledit support (30) :
ce par quoi, lorsque ledit élément de levier (20) est actionné en rotation ascendante et descendante, un pignon de renvoi (33) monté sur ledit support (30) s'engrène avec une crémaillère (23) positionnée sur ledit élément de levier (20) et ledit support de maintien de cassette (40) positionné sur ledit support (30) coulisse grâce à un moyen d'embrayage relié audit pignon, ce par quoi est réalisé le chargement et l'éjection d'une cassette à bande.

2. Mécanisme selon la revendication 1, dans lequel, en usage, les opérations de chargement et d'éjection et les opérations d'élévation et de descente d'une cassette à bande sont réalisées consécutivement sur ledit support (30) en actionnant ledit élément de levier (20) de manière à le faire tourner pour élévation et descente.

3. Mécanisme selon la revendication 1 ou 2, dans lequel des fentes (12, 32) sont formées à une extrémité de ladite platine principale (10) et dudit support (30), respectivement, et reçoivent des première et seconde broches (21, 22) formées sur ledit élément de levier (20).

4. Mécanisme selon la revendication 1, 2 ou 3, dans lequel ledit moyen d'embrayage comprend un secteur denté (36) installé sur ledit support (30) pour pivoter au moyen d'un pignon conique 34 formé de manière coaxiale avec ledit pignon de renvoi (33) ; et un levier coulissant (39) qui tourne en engrènant avec ledit secteur denté (36), une de ses extrémités ayant une fente (39b) recevant une broche (40a) positionnée sur ledit support de maintien de cassette (40).

5. Mécanisme selon la revendication 3, ou la revendication 4 lorsqu'elle en dépend, dans lequel les directions desdites fentes (12, 32) formées sur ladite platine principale (10) et ledit support (30) sont pratiquement à angle droit l'une vis-à-vis de l'autre.

6. Mécanisme selon la revendication 4 ou les revendications 4 et 5, dans lequel une force élastique est appliquée audit secteur denté (36) par un ressort de torsion (37) dont une des extrémités est fixée audit support (30).

7. Magnétophone enregistreur et/ou lecteur muni d'un mécanisme selon l'une quelconque des revendications précédentes.
